# EUROPEAN PATENT SPECIFICATION

(11) **EP 2 059 400 B1**
(45) Date of publication and mention of the grant of the patent: **10.11.2010**
(21) Application number: 07803727.2
(22) Date of filing: 30.08.2007
(51) Int. Cl.: B60D 1/00, B62D 53/02, A01G 23/00

(54) **LOCKING DEVICE**
VERRIEGELUNGSVORRICHTUNG
DISPOSITIF DE BLOCAGE

(30) Priority: 30.08.2006 FI 20065536
(43) Date of publication of application: 20.05.2009
(73) Proprietor: Ponsse OYJ, 74200 Vieremä (FI)
(72) Inventor: HUKKANEN, Pentti, 74700 Kiuruvesi (FI)
(74) Representative: Niemi, Hakan Henrik
(86) International application number: PCT/FI2007/050464
(87) International publication number: WO 2008/025883

(56) References cited:
- EP-B1- 1 509 438
- WO-A-01/66407
- WO-A1-01/66407
- RU-C1- 2 160 206
- US-A- 4 116 459

## Description

### BACKGROUND OF THE INVENTION

The present invention relates to a locking device according to the preamble of claim 1.

Such a device is intended to be used for locking a rotating joint between the frame parts of a working machine composed of two or more frame parts for the duration of driving or other work. The solution is particularly suitable for use in working machines intended to move in the terrain, such as in forest machines.

Forest machines are typically composed of a base machine, or a carrier machine, and some kind of a boom assembly arranged either for loading or for processing pieces of wood. Such basic or carrier machines are mainly composed of a two-part frame, the control of the forest machine during the driving being arranged to take place by changing the angle between the two frame parts by means of hydraulically driven actuators, for example. In this way, the frame parts of the forest machine settle at the desired angle relative to one another, and the machine turns in the desired direction relative to its direction of travel during driving. This is usually called articulated steering, which requires that a frame joint, or rather an articulated steering joint, that rotates relative to at least one shaft, be used between the frame parts.

In addition, particularly in the case of a forest machine, the terrain where the machine is used for working is quite uneven and usually requires not only a mere articulated steering joint, but also a joint enabling the reciprocal rotation of the frame parts. The rotating movement enabled by said joint takes place substantially relative to the longitudinal axis of such a working machine. Said joint enabling a rotating movement relative to the longitudinal axis of a working machine is usually called a rotating joint. The utilization of such a rotating joint enables the achievement of a solution wherein the wheels of the working machine may be kept substantially fixed into the ground, even if the shapes of the terrain were significantly uneven. This, in turn, enables, not only an efficient working and traction force, but also good balance properties in an uneven terrain.

Solutions are also known wherein the requirements set by an uneven terrain have been allowed for in a forest machine composed of two or more frame parts despite the fact that an articulated steering joint enabling movement relative to only one axis of rotation is used between the frame parts of the forest machine. In this case, one or more axes, axis arrays or other arrangements are arranged swinging substantially relative to the axis of rotation in the direction of the longitudinal axis of the machine. Such a solution is disclosed in published US patent 4,099,733, for example.

In many different operating situations of a working machine, its entire mass and the available stability are required in order to be able to support a load to be processed at the end of the boom array or a harvester head therein, for example, without the frame part of the working machine, wherein the boom array is placed, falling over. For this reason, it is necessary that the joints enabling the rotation between the frame parts can be locked entirely or that at least the rotating movement between them can be limited. Situations may also be encountered during work, wherein it is preferable to lock the rotation of the frame parts relative to each other during driving. Examples include situations wherein a large hole or a ditch, for example, is traversed in the terrain. It is clear that even extremely high force effects have to be transferred between the frame parts in different operating situations.

Numerous different manners are previously known of implementing limitation of the reciprocal rotation of the frame parts or of totally preventing the rotation in a forest machine in particular. One such known manner is to arrange one or more actively controllable actuators, such as hydraulic cylinders, in the vicinity of the joint enabling the rotation, whereby one end of the one or more hydraulic cylinders is arranged in a different frame part than the other end of the same cylinder. In such a solution, the reciprocal rotation of the frame parts causes a change in the length of the hydraulic cylinder. Accordingly, it is possible to prevent or restrict the rotation for instance by closing the control channels of said pressure medium-driven actuator with separate control valves. One such solution is disclosed in published patent WO 03/055735.

An advantage of the above-described solution is the possibility to throttle the flows of the actuator instead of completely closing them, enabling the implementation of a kind of dampening for steadying the rotation of the frame parts. In addition, the locking function is stepless, enabling it to be activated at any angle of rotation between the frame parts. On the other hand, drawbacks of the solution may be considered its relatively large size and weight. If the actuators are placed close to the axis of rotation of the frame parts, the forces directed thereto become high and, correspondingly, the diameter of the actuators large. On the other hand, if the actuators are placed farther away from said axis of rotation, the arm of force becomes longer, allowing the actuator to be dimensioned for a smaller diameter. However, in the latter solution, the long length of stroke required of the actuator becomes a problem complicating their placement in the vicinity of the frame joint of the forest machine. In addition, leaks occurring in hydraulic cylinders, for example, often prevent the implementation of a completely non-sliding locking.

Another manner of preventing movement in a rotating joint is to use solutions based on friction; so-called frictionally engaged solutions. In these, a kind of brake disc or other surface, to which the force effect generated by brake members fastened to the opposite frame part is directed, is arranged to rotate with one frame part. One such solution is disclosed in publication US 4,235,308. Advantages of the solution include, among others, stepless operation and quite a compact structure. As problems in the solution may be mentioned wear and maintenance requirement of the friction elements composed by the brake disc and the brake members. Problems are also caused by the usual impurities in the operating environment of the forest machine, such as hydraulic oil and humidity, which may instantaneously impair the locking performance of the arrangement.

Still further, a positive connection realized by a gear rack is known, wherein two means provided with substantially equivalent coggings are pressed against one another by means of a hydraulic actuator, for example. The cogged surfaces of such known gear racks have been straight-cogged up to now. In such solutions, the coggings are also arranged linearly movable with respect to one another, whereby at least one gear rack has had to be provided with sufficient control, such as a slot, wherein the gear rack may move in its longitudinal direction. A significant problem in this solution is in that the force effect between the gear rack that is arranged movable in its longitudinal direction and the other frame part has to be transferred by some manner with backlash, which converts a movement occurring at a given radius on a circular path and generated from the axis of rotation of the frame parts of the forest machine into a linear movement.

Thus, the arrangement has been arranged to transfer only force effects circulating with regard to the axis of rotation in the direction of the longitudinal axis of the working machine. This has been implemented for instance by arranging one gear rack to act via a tap adaptable to an elongated counter opening. It is essential that this junction between the tap and the gear rack enables the movement of the tap on the level of the gear rack in an essentially perpendicular direction with respect to the movement occurring in the longitudinal direction of the gear rack.

Published patent WO 01166407, which content covers the preamble features of claim 1, in turn, discloses a lately introduced solution, wherein the locking of the rotating joint is implemented by means of a special chuck nut. The solution is quite complex and expensive to implement. Maintenance of a locking according to such a solution is also problematic and laborious. The force transmission members of the openable and closable positive connection that transfers force effects between the frame parts according to the publication are composed of wearing parts. The replacement thereof with new ones in the solution according to said published patent would seem to require that the entire frame joint of the working machine be disassembled and that a working machine composed of two frame parts, for example, be disassembled into two entirely separate parts.

### BRIEF DESCRIPTION OF THE INVENTION

The object of the present invention is to eliminate drawbacks associated with the above-described known art. A further object is to disclose a simple and operating, totally novel solution for implementing, not only the locking of the rotating movement between the frame parts of a working machine, but also the elimination of the backlashes of the frame joint during working.

This object is achieved in accordance with the present invention by the locking arrangement having the characteristics defined in the claims.

More exactly said, the device of the invention is generally characterized in what is disclosed in the characterizing part of independent claim 1.

Preferred embodiments of the invention are described in the dependent claims.

Accordingly, the invention is based on the idea that the same arrangement simultaneously implements both the elimination of the backlash of the rotating joint for instance for the duration of loading work, as well as the locking of the rotation of a conventional frame joint more strongly and more compactly than previously.

The invention brings forth significant advantages. Consequently, it is very common that a larger backlash than usually is generated in the rotating joint of particularly an older working machine. Backlash may indeed appear both in the axial and in the radial direction in the joint enabling the rotation of the frame parts of the working machine relative to each other around the longitudinal axis of the machine. The present invention eliminates the impairments in the usage characteristics of the machine caused by said backlashes.

Thanks to its compact size, the arrangement of the invention facilitates the implementation of the joint arrangements between the frame parts of a forest machine in a durable and easily serviceable manner. Thanks to its simple structure, the function may also be implemented with a very small number of separate parts.

The present invention is easy to install in new working machines, but it may equally easily be used to replace locking arrangements used in old working machines. The arch-like cogged plate connector, in particular, is easily adaptable to the bolt pitch employed for fastening the bearing used in the frame joint of the working machine, even without separate fastening parts or means.

The arch-like cogged plate connector and the active counter piece may also be replaced with friction-based means.

Other advantages brought forth by the invention are presented in the following, more detailed description of some specific embodiments of the invention.

### BRIEF DESCRIPTION OF THE FIGURES

In the following, some preferred embodiments of the invention will be described in more detail with reference to the accompanying drawing, in which
Figure 1 shows an operating environment of the locking device of the invention in a joint of a forest machine,
Figure 2 shows an exploded view of a structural detail of the rotating joint of a working machine, and the gripping means therein,
Figure 3 shows an active means according to Figure 2,
Figure 4 shows a passive means according to Figure 2,
Figure 5 shows the cooperation of the means according to Figures 3 and 4,
Figure 6 shows a second embodiment of the active means according to Figure 2,
Figure 7 shows a second embodiment of the passive means according to Figure 2,
Figure 8 shows an exploded view of a structural detail of the rotating joint of a working machine, of an alternative embodiment of the gripping means therein, and
Figure 9 shows an elevation view of an alternative embodiment of the rotating joint according to Figure 8.

### DETAILED DESCRIPTION OF PREFERRED EMBODIMENTS

In the following, some preferred embodiments of the present locking device are described with reference to the above figures. Herein, the locking device comprises the structural parts denoted in the figures with reference numerals that correspond to the reference numerals used in this description.

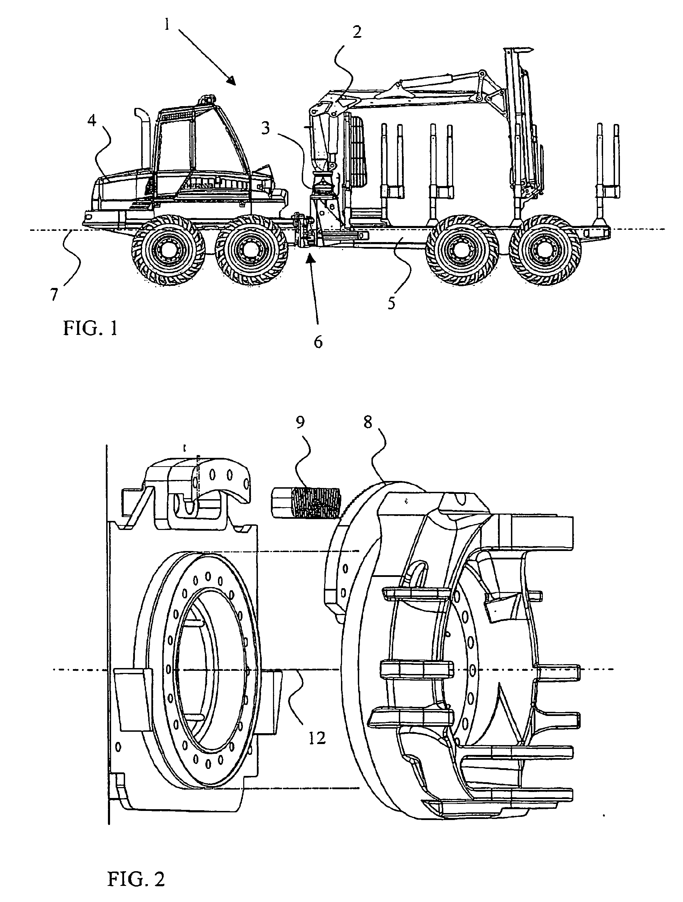

The present solution for locking a rotating joint is suitable for utilization in a forest machine 1 according to Figure 1, for example. In the figure, a side view of the forest machine is shown, whereby the present locking device is disposed substantially in the vicinity of a mounting 3 of a crane 2.

In the working machine 1 according to Figure 1, composed of at least two frame parts 4 and 5, and moving in the terrain, the frame parts are interconnected with a joint 6 of at least one degree of freedom. Such a joint comprises at least a rotating joint enabling the rotation of these frame parts relative to a longitudinal axis 7 in the working machine and, accordingly, also relative to one another.

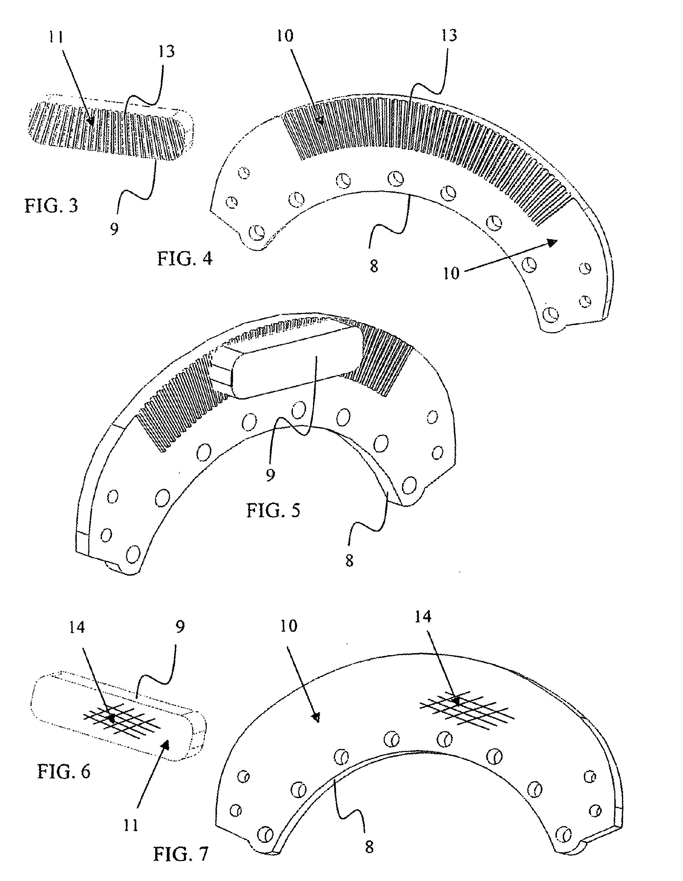

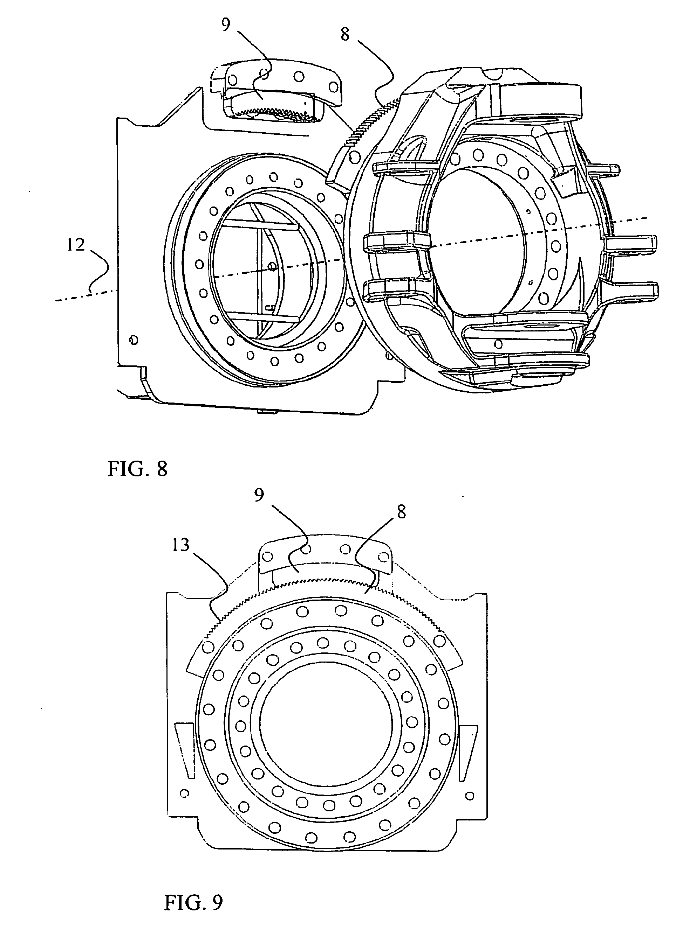

In its present embodiment, such a rotating joint, known *per se*, is composed of structures disposed in the opposite frame parts 4 and 5. By bringing these structures in opposite frame parts into mechanical cooperation, by means of the members of the locking device according to Figures 5 and 9, among others, the force effect of the rotating movement is transferred from one frame part to the other, and the rotation of the frame parts relative to one another is substantially prevented. In the present solution, the members of the locking device comprise gripping means 8 and 9 that are controllable into a mechanical contact against one another. Accordingly, opposite surfaces 10 and 11 of the gripping means, the surfaces being controllable towards one another, are particularly radially cogged, whereby the cogged surfaces, when in contact with one another, constitute a frictionally engaged coupling according to Figure 5 or 9.

When studying Figure 2, it may be observed that said gripping means 8 and 9 comprise a first passive means 8 that is substantially rigidly attachable to the rotating joint and that is shaped substantially circumferential in this preferred embodiment. In accordance with Figures 2 and 4, this passive means extends at least partly around the axial direction 12 of the rotating joint. In its preferred embodiment according to the figures, the passive means has a length of arc that corresponds to an angle of rotation of 60 to 90°.

Although this passive means 8 is shown in the figures to constitute only a fraction of the periphery of a circle, it may be extended, if desired, substantially around the entire rotating joint in the axial direction. This way the angle of rotation of the passive means becomes substantially 360° long. To simplify installation and maintenance, it is therefore preferable to compose the passive means of at least two separate pieces that are attachable substantially rigidly to one another, if need be.

In this embodiment, the second gripping means of the locking device is called an active means 9, which, in contrast to the former means, is preferably of a rectangular shape. This means is arranged opposite to the passive means, being thus arranged in the opposite frame part of the working machine 1. The active means is controllable in a manner known *per se* by a linear movement against the passive means with at least one actuator in the manner shown in Figure 5. These actuators, known *per se*, have not been separately shown in the figures.

The gripping means 8 and 9 according to the embodiment of Figures 2 to 5 comprise cogged surfaces 10 and 11, which are on a transverse level with respect to the axial direction of the rotating joint. In accordance with the figures, the surfaces of the gripping means thus comprise substantially an entire or only a partial cogging 13. The normals of the cogged surfaces are substantially parallel to the axial direction of the rotating joint. This being so, the cogging 13 of the surfaces of the gripping means is radial relative to the longitudinal axis 7 of the working machine 1, and the active means is controllable in the axial direction 12 of the rotating joint against the cogged surface of the passive means.

In accordance with Figures 6 and 7, the gripping means 8 and 9 may also be implemented in manners known *per se* as frictionally engaged. In this case, the surface 10 and 11 of such a gripping means may comprise some friction-increasing coating 14. The locking function may be implemented with such gripping means as substantially stepless or, if desired, somewhat gliding.

It is also feasible to compose the gripping means 8 and 9 in accordance with Figure 8 in such a manner that their cogged surfaces 10 and 11 comprise cylinder surfaces that are substantially concentric relative to the axial direction of the rotating joint. This being so, the normals of the cogged surfaces are thus perpendicular to the axis of rotation of the rotating joint. In this embodiment, the active means 9 is thus controllable both in the axial direction and in the radial direction of the rotating joint against the cogged surface of the passive means 8 in accordance with Figure 9.

## Claims

1. A locking device in a working machine (1) composed of two or more frame parts (4, 5) and moving in a terrain,
the frame parts (4, 5) being interconnected with a joint (6) comprising at least a rotating joint for enabling the rotation of the frame parts relative to one another with respect to a longitudinal axis (7) of the working machine,
the locking device comprising members disposed in connection with the rotating joint arranged between the opposite frame parts, the members achieving a substantial prevention of the rotation of the frame parts when brought into cooperation;
the members of the locking device comprising gripping means (8, 9) controllable against each other into a mechanical contact for transferring a rotational movement between the frame parts (4, 5),
the gripping means comprising a first passive means (8) having a substantially circumferential shape and being arranged to rotating joint of its receiving frame part and extending at least partly around the axial direction of the rotating joint,
a second opposite active means (9) , being adapted to be controllable by a linear movement against the first passive means (8) with at least one actuator, and
surfaces (10, 11) that are disposed in the gripping means (8, 9) and are oriented towards each other comprising a radial cogging (13), being on a transverse level relative to the axial direction of the rotating joint,
**characterized in that**
the passive means (8) is attached substantially rigidly to the rotating joint, and
the active means (9) comprises a preferably rectangular shape being arranged in the frame part opposite of the passive means, being controllable relative this opposite frame part by a linear movement against the passive means with at least one actuator.

2. A locking device as claimed in claim 1, **characterized in that** the passive means (8) constitutes an arch, the length of which corresponds to an angle of rotation of 60 to 90°.

3. A locking device as claimed in claim 1, **characterized in that** the passive means (8) extends substantially around the entire rotating joint in the axial direction.

4. A locking device as claimed in claim 3, **characterized in that** the passive means (8) that encircles the rotating joint is composed of at least two pieces.

5. A locking device as claimed in any one of the preceding claims, **characterized in that** the gripping means (8, 9) is only partly cogged.

## Patentansprüche

1. Verriegelungsvorrichtung in einer Bearbeitungsmaschine (1), die aus zwei oder mehr Gestellteilen (4, 5) besteht und sich auf einem Gelände fortbewegt,
wobei die Gestellteile (4, 5) mittels eines Gelenks (6) verbunden sind, das zumindest ein Drehgelenk aufweist, das die Rotation der Gestellteile relativ zueinander in Bezug auf eine Längsachse (7) der Bearbeitungsmaschine ermöglicht,
die Verriegelungsvorrichtung mit dem zwischen den gegenüberliegenden Gestellteilen angeordneten Drehgelenk in Verbindung stehende Elemente aufweist, mit denen eine wesentliche Verhinderung der Rotation der Gestellteile erreicht wird, wenn sie in die Zusammenarbeit gebracht werden;
die Elemente der Verriegelungsvorrichtung Greifmittel (8, 9) aufweisen, die gegeneinander in mechanischen Kontakt steuerbar sind, um eine Rotationsbewegung zwischen den Gestellteilen (4, 5) zu übertragen,
wobei die Greifmittel ein erstes passives Mittel (8) aufweisen, das eine wesentlich ringförmige Form hat und im Drehgelenk seines aufnehmenden Gestellteils angeordnet ist und sich zumindest teilweise um die axiale Richtung des Drehgelenks erstreckt,
ein zweites gegenüberliegendes aktives Mittel (9) angepasst ist, durch eine lineare Bewegung gegen das erste passive Mittel (8) mit zumindest einem Stellantrieb steuerbar zu sein, und
Oberflächen (10, 11), die in den Greifmitteln (8, 9) angeordnet und gegeneinander gerichtet sind, eine radiale Verzahnung (13) aufweisen, die relativ zur axialen Richtung des Drehgelenks auf einer Transversalebene ist,
**dadurch gekennzeichnet, dass**
das passive Mittel (8) wesentlich starr an das Drehgelenk befestigt ist und
das aktive Mittel (9) eine vorzugsweise rechteckige Form hat und im Gestellteil gegenüber dem passiven Mittel angeordnet ist und relativ zu diesem gegenüberliegenden Gestellteil durch eine lineare Bewegung gegen das passive Mittel mit zumindest einem Stellantrieb steuerbar ist.

2. Verriegelungsvorrichtung nach Anspruch 1, **dadurch gekennzeichnet, dass** das passive Mittel (8) einen Bogen ausbildet, dessen Länge einem Drehwinkel von 60 bis 90° entspricht.

3. Verriegelungsvorrichtung nach Anspruch 1, **dadurch gekennzeichnet, dass** sich das passive Mittel (8) wesentlich um das gesamte Drehgelenk in axialer Richtung erstreckt.

4. Verriegelungsvorrichtung nach Anspruch 3, **dadurch gekennzeichnet, dass** das passive Mittel (8), das das Drehgelenk umgibt, aus zumindest zwei Stücken besteht.

5. Verriegelungsvorrichtung nach einem der vorhergehenden Ansprüche, **dadurch gekennzeichnet, dass** das Greifmittel (8, 9) nur teilweise verzahnt ist.

## Revendications

1. Dispositif de blocage dans une machine (1) composée de deux ou plus parties de bâti (4, 5) et se déplaçant sur un terrain,
les parties de bâti (4, 5) étant interconnectées par un joint (6) comprenant au moins un joint tournant pour permettre la rotation des parties de bâti l'une par rapport à l'autre relativement à un axe longitudinal (7) de la machine,
le dispositif de blocage comprenant des éléments disposés en liaison avec le joint tournant agencés entre les parties de bâti opposées, les éléments permettant d'empêcher sensiblement la rotation des parties de bâti quand elles sont amenées en coopération ;
les éléments du dispositif de blocage comprenant des moyens d'accrochage (8, 9) pouvant être amenés l'un contre l'autre en contact mécanique pour transférer un mouvement de rotation entre les parties de bâti (4, 5),
les moyens d'accrochage comprenant des premiers moyens passifs (8) ayant une forme sensiblement circonférentielle et étant agencés sur le joint tournant de sa partie de bâti de réception et s'étendant au moins en partie autour de la direction axiale du joint tournant,
des seconds moyens actifs opposés (9), adaptés pour pouvoir être amenés par un mouvement linéaire contre les premiers moyens passifs (8) par au moins un actionneur, et
des surfaces (10, 11) qui sont disposées dans les moyens d'accrochage (8, 9) et sont orientées l'une vers l'autre comprenant une denture radiale (13), qui est sur un niveau transversal par rapport à la direction axiale du joint tournant,
**caractérisé en ce que**
les moyens passifs (8) sont fixés sensiblement rigidement sur le joint tournant, et
les moyens actifs (9) comprennent une forme de préférence rectangulaire agencée dans la partie de bâti opposée aux moyens passifs, qui peut être amenée par rapport à cette partie de bâti opposée par un mouvement linéaire contre les moyens passifs par au moins un actionneur.

2. Dispositif de blocage selon la revendication 1, **caractérisé en ce que** les moyens passifs (8) constituent un arc, dont la longueur correspond à un angle de rotation de 60 à 90°.

3. Dispositif de blocage selon la revendication 1, **caractérisé en ce que** les moyens passifs (8) s'étendent sensiblement autour de tout le joint tournant dans la direction axiale.

4. Dispositif de blocage selon la revendication 3, **caractérisé en ce que** les moyens passifs (8) qui encerclent le joint tournant sont composés d'au moins deux pièces.

5. Dispositif de blocage selon l'une quelconque des revendications précédentes, **caractérisé en ce que** les moyens d'accrochage (8, 9) sont seulement en partie dentés.
